# EUROPEAN PATENT SPECIFICATION

(11) **EP 2 085 655 B1**
(45) Date of publication and mention of the grant of the patent: **30.11.2011**
(21) Application number: 08001591.0
(22) Date of filing: 29.01.2008
(51) Int. Cl.: F16H 57/04, F16H 59/72

(54) **Automatic transmission**
Automatikgetriebe
Transmission automatique

(43) Date of publication of application: 05.08.2009
(73) Proprietor: GM Global Technology Operations LLC, Detroit, MI 48265-3000 (US)
(72) Inventor: Clauss, Thierry, 67100 Strasbourg (FR); Gautier, Vincent, 67230 Westhouse (FR); Barth, Patrick, 67115 Plobsheim (FR)
(74) Representative: Strauss, Peter

(56) References cited:
- WO-A-2006/009080
- WO-A-2007/110712
- DE-A1- 19 906 558
- JP-A- 59 026 665
- US-A- 5 890 509
- ANONYMOUS: "Cooler circuit flow meter for automatic transmissions" RESEARCH DISCLOSURE, MASON PUBLICATIONS, HAMPSHIRE, GB, vol. 336, no. 73, 1 April 1992 (1992-04-01), XP007117575 ISSN: 0374-4353

## Description

The invention concerns an automatic transmission with an oil circuit comprising an oil pan, a filter, a pump, a torque converter, a cooler, a center lube system and a number of clutches.

It might occur in automatic transmissions that there is a pump noise, especially during cold operation conditions. This pump noise, also called suction noise, comes from air ingestion at the filter inlet and mainly depends on the transmission temperature.

At temperature values above 20°C, the sump oil level is a function of transmission temperature, line pressure, gear, torque converter clutch mode and input speed, but does not depend on time. The oil level in the sump is constant over measurement time because the oil flow through the filter (consumed flow) is balanced by all the oil drain backs (i.e. leaks, openings in the housings, hubs and main case).

Under cold operating conditions (e.g. T<0°C), this is no more true. When the engine is started, oil begins to be consumed by the pump. Due to its viscosity, the oil flow back to the filter inlet (due to gravity) is delayed and less important than the consumed flow. This leads to the oil sump level decreasing until there is no more enough oil to feed the filter. Line pressure begins to oscillate and a pump suction noise appears. Pump noise correlates well with line pressure oscillations due to insufficient oil flow back to the filter.

There have been several kinds of attempts in order to reduce line instability and pump noise under cold conditions.

A first one is to re-route the parallel path leak downwards. The flow from the cooler divides into center lube flow and a calibrated leak flow to the sump, providing the so-called "parallel path" cooling architecture. This leak, previously coming out from the upper side of the valve body is moved to its lower side, so as to flow directly to the filter inlet.

Secondly, the oil flow through the filter can be reduced. In many cars, the oil flow through the filter (pump consumption) is linked to line pressure. Therefore, a flow reduction could be achieved by decreasing commanded line values in many calibration tables which command for instance lube and garage shifts pressures.

A third approach is to reduce sensitivity to air suction by reducing the tolerance on the filter vertical location. In cold conditions, the oil flow consumed by the pump is greater than the flow of oil coming back to the filter inlet, which leads to the sump oil level decreasing until air is sucked. This phenomenon gets worse with an increased vertical distance between the filter inlet and the pan bottom. It has to be made sure that the filter lies on the pan bottom.

WO 2006/009080 A1 discloses a lubricating oil supply control device for a transmission without using an additional sensor and by making computation performed by a controller simple. As a result, devices in a control system can be formed in a simple structure and at low cost. The structure of a valve body and a layout of hydraulic piping are made simple in the lubricating oil supply control device, and as a result, devices in a hydraulic system can be formed as a simple structure and at low cost. The lubricating oil supply control device has an engine controller for controlling an engine, a transmission controller for controlling a transmission, a lubricating oil supply path for leading a lubricating oil discharged from a lubricating hydraulic pump to the transmission, a bypass oil path for leading the lubricating oil in the lubricating oil supply path to a lubricating oil tank, a relief valve that is a relief valve for discharging the lubricating oil in the lubricating oil supply path to the lubricating oil tank through the bypass oil path and is operated according to a control electric signal, a restriction provided on the exit side of the relief valve, and a controller for controlling lubricating oil supply in which control information of the engine controller and(or) control information of the transmission controller are inputted and which produces and outputs, based on the control information, a control electric signal for operating the relief valve.

US 5,890,509 which is considered being the closest prior art discloses a cooler bypass valve, located in a hydraulic circuit between the discharge side of a torque converter and lubrication circuit, that includes a valve spool urged by feedback pressure acting in opposition to the force of a compression spring to a bypass cooling mode position where the converter discharge fluid flow is connected to the lubrication circuit bypassing the oil cooler. The bypass valve includes a viscosity-sensitive pressure divider, which includes a series arrangement of a laminar orifice and a sharp-edged orifice located between the converter discharge and an oil sump. As oil temperature increases, flow through the laminar orifice produces a control pressure in opposition to the feedback pressure and additive to a spring force, which combine to move the valve spool to a cooling mode position where substantially all of the converter discharge is directed through the oil cooler. In a predetermined temperature range, the valve maintains a position where a portion of the converter discharge is directed to the oil cooler, and the residual to the lubrication circuit.

WO 2007/110712 A2 discloses a perforated plate flow conditioner including a central hole,- and at least one outer array of alternating large outer holes and small outer holes, wherein the difference between the diameters of the holes in the array is between 0.25% and 25% of the large hole diameter. In an alternate embodiment, the conditioner further includes an inner array of alternating large inner holes and small inner holes, and wherein no two adjacent holes have the same diameter. In another alternate embodiment, the conditioner has no central hole, and has an array of alternatingly-sized holes.

All the preceding changes improve transmission behaviour in cold conditions: pump noise appears later after the engine start and is less audible. Yet more robust changes are required by the transmission customers.

The object of the invention is to avoid or at least to improve an automatic transmission in order to avoid or at least to reduce significantly pump noise.

This object is achieved in that means for restricting the flow rate when the oil viscosity is high are provided in the oil circuit.

The means for restricting the flow rate reduce the free section of the flow channel so that the fluid flow is reduced in this flow channel. Measurements have shown that it is possible to reduce the cooler flow by 30% at -20°C while decreasing it only by 9% at 100°C. Such a kind of restriction can be used to reduce any flow rate, providing the geometrical characteristics fit the operating conditions. The section and the thickness of the restriction can be adapted to the fluid flow, the fluid viscosity, the operating temperature and the material roughness. An important advantage of the invention is that it provides a self-regulating system (according to the viscosity of the fluid) without needing complex regulating means.

The means for restricting the fluid flow rate improve the cold performance in terms of line pressure level and stability, thereby reducing significantly transmission pump noise, improving clutch pressure command and clutch pressure stability.

In a first embodiment of the invention, the means for restricting the fluid flow rate are configured as a cylindrical restriction provided within a flow channel.

According to the invention, through holes can be provided in the restriction in order to allow the oil to pass.

Conformous to the invention, it is also possible that incurved long holes parallel to the outline of the restriction are provided in the restriction in order to allow the oil to pass.

Alternatively, radial long holes can be provided in the restriction in order to allow the oil to pass.

In another embodiment of the invention, axial long holes are provided in the restriction in order to allow the oil to pass.

Finally, according to the invention, the restriction is placed into the channel coming from the cooler in the valve body.

A very suitable place for the restriction is between the cooler and the center lube system.

Generally, the restriction could be placed anywhere in the main flow of the oil circuit, but it is preferred to arrange it between the cooler and the center lube system.

The invention is hereafter explained in detail with reference to the drawings which show:

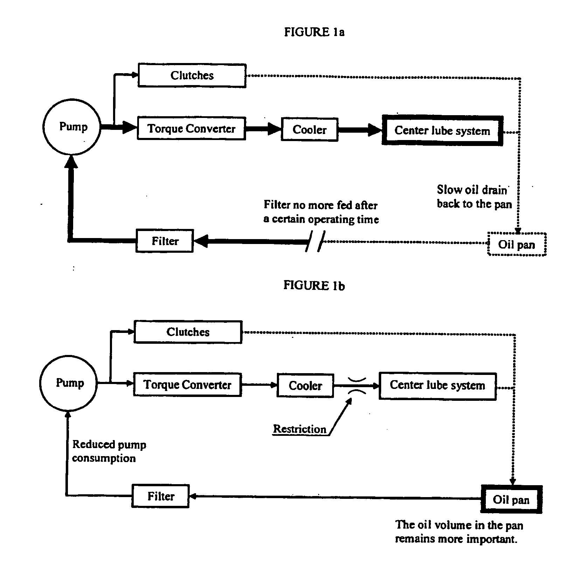

FIGURES 1a and
   1b a schematic representation of the restriction effect under cold conditions,
FIGURES 2a, 2b,
   2c, 2d and 2e different designs of the restriction according to the invention.

As represented in FIGURE 1a which shows the cold conditions without restriction corresponding to the prior art, the oil goes from the oil pan through the filter to the pump. The main flow is from the pump over the torque converter to the cooler and the center lube system. A side line goes through the clutches and both lines go back to the oil pan. In this configuration, the filter is no more fed after a certain operating time which leads to the undesired pump noise due to air ingestion.

FIGURE 1b shows a configuration according to the present invention in which the oil cycle in the transmission remains unchanged but a restriction is provided between the cooler and the center lube system. As shown by the thickness of the flow lines, the side line over the clutches remains unchanged whereas the main line from the pump to the torque converter over the cooler and the center lube system to the oil pan shows a smaller flow decreasing also the flow from the oil pan over the filter to the pump. Due to this decrease, less oil is pumped under cold conditions so that the oil volume in the oil pan remains more important. Less air ingestion occurs and pump noise occurs later than in the prior art.

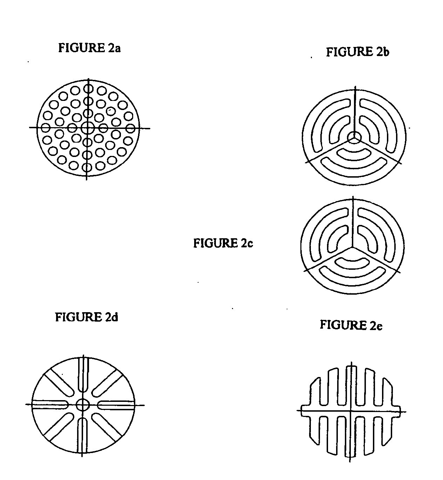

The FIGURES 2a to 2e show different restriction designs.

The restriction will have a shape corresponding to the shape of the flow channel which is generally of circular section. The restriction is of cylindrical shape. Be it known that its effect increases with the thickness of the restriction.

The restriction may present a multitude of through holes in a regular or an irregular pattern as shown in FIGURE 2a. In this FIGURE, the central through hole corresponding to the biggest flow has a larger diameter than the other trough holes. Generally, the size of the through holes can be either identical or variable. In order to have a homogenous flow, it is preferable to increase the size of the through holes from the outline of the restriction to its center.

FIGURE 2b shows a restriction with incurved long holes parallel to the outline of the restriction and a central hole. The restriction of this example is subdivided in three identical sections, each one of them having two long holes which are distant from the section limit and a third of the central hole.

FIGURE 2c shows a restriction which is quite similar to the restriction of FIGURE 2b with the sole difference that there is no central hole.

The restriction of FIGURE 2d has a central hole and long holes extending radially from the central hole. There are eight long holes separated by 45° one from another.

A further restriction can be seen in FIGURE 2e. This restriction shows axial long holes (parallel to the y axis) separated by material extending around the x axis.

All the restriction designs shown are given as examples and there may be much more possibilities for designing such restrictions. The essential idea is that the cold fluid with high viscosity passes the restrictions very slowly compared to hot fluid of which the flow rate is only slightly reduced by the restrictions.

## Claims

1. Automatic transmission with an oil circuit comprising an oil pan, a filter, a pump, a torque converter, a cooler, a center lube system and a number of clutches, wherein
means are provided in the oil circuit for restricting the flow rate when the oil viscosity is high, **characterized in that** the means for restricting the flow rate are configured as cylindrical restriction provided within a flow channel, through holes are provided in the restriction in order to allow the oil to pass, and the restriction is placed into a flow channel coming from the cooler in a valve body.

2. Automatic transmission according to claim 1 or claim 2, **characterized in that** incurved long holes parallel to the outline of the restriction are provided in the restriction in order to allow the oil to pass.

3. Automatic transmission according to claim 1 or claim 2, **characterized in that** radial long holes can be provided in the restriction in order to allow the oil to pass.

4. Automatic transmission according to claim 1 or claim 2, **characterized in that** axial long holes are provided in the restriction in order to allow the oil to pass.

5. Automatic transmission according to claim 1, **characterized in that** the restriction is between the cooler and the center lube system restriction.

## Patentansprüche

1. Automatikgetriebe mit einem Ölkreislauf, der eine Ölwanne, einen Filter, eine Pumpe, einen Drehmomentwandler, einen Kühler, ein zentrales Schmiersystem und eine Anzahl von Kupplungen umfasst, wobei
im Ölkreislauf Mittel zur Beschränkung der Strömungsrate bei hoher Viskosität des Öls bereitgestellt sind, **dadurch gekennzeichnet, dass**
die Mittel zur Beschränkung der Strömungsrate als zylindrische Drossel konfiguriert sind, die in einem Strömungskanal vorgesehen ist,
in der Drossel durchgehende Löcher vorgesehen sind, um den Durchfluss des Öls zu ermöglichen, und
die Drossel in einem vom Kühler kommenden Strömungskanal in einem Ventilkörper platziert ist.

2. Automatikgetriebe gemäß Anspruch 1 oder Anspruch 2, **dadurch gekennzeichnet, dass** einwärts gebogene, lange Löcher parallel zur Kontur der Drossel in der Drossel vorgesehen sind, um den Durchfluss des Öls zu ermöglichen.

3. Automatikgetriebe gemäß Anspruch 1 oder Anspruch 2, **dadurch gekennzeichnet, dass** in die Drossel radiale, lange Löcher eingebracht werden können, um den Durchfluss des Öls zu ermöglichen.

4. Automatikgetriebe gemäß Anspruch 1 oder Anspruch 2, **dadurch gekennzeichnet, dass** in der Drossel axiale, lange Löcher vorgesehen sind, um den Durchfluss des Öls zu ermöglichen.

5. Automatikgetriebe gemäß Anspruch 1, **dadurch gekennzeichnet, dass** die Drossel zwischen dem Kühler und der Drossel des zentralen Schmiersystems angeordnet ist.

## Revendications

1. Transmission automatique avec un circuit d'huile comprenant un carter d'huile, un filtre, une pompe, un convertisseur de couple, un refroidisseur, un système de lubrification central et un nombre d'embrayages, où des moyens sont fournis dans le circuit d'huile pour restreindre le débit lorsque la viscosité de l'huile est élevé, **caractérisée en ce que**
les moyens pour restreindre le débit sont configurés comme une restriction cylindrique fournie à l'intérieur d'un canal de débit,
des orifices de passage sont fournis dans la restriction afin de permettre à l'huile de passer, et la restriction est placée dans un canal de débit provenant du refroidisseur dans un boîtier de soupapes.

2. Transmission automatique selon la revendication 1 ou la revendication 2, **caractérisée en ce que** des orifices longs incurvés parallèles au contour de la restriction sont fournis dans la restriction afin de permettre à l'huile de passer.

3. Transmission automatique selon la revendication 1 ou la revendication 2, **caractérisée en ce que** des orifices longs radiaux peuvent être fournis dans la restriction afin de permettre à l'huile de passer.

4. Transmission automatique selon la revendication 1 ou la revendication 2, **caractérisée en ce que** des orifices longs axiaux sont fournis dans la restriction afin de permettre à l'huile de passer.

5. Transmission automatique selon la revendication 1, **caractérisée en ce que** la restriction se trouve entre le refroidisseur et la restriction du système de lubrification central.
